Europäisches Patentamt

European Patent Office

Office européen des brevets

(11) Publication number: **0 301 249**
**A2**

# (12) EUROPEAN PATENT APPLICATION

(21) Application number: **88110223.0**

(22) Date of filing: **27.06.88**

(51) Int. Cl.⁴: **C03C 11/00**

(30) Priority: **27.07.87 ES 8702201**

(43) Date of publication of application:
**01.02.89 Bulletin 89/05**

(84) Designated Contracting States:
**AT BE CH DE FR GB GR IT LI NL SE**

(71) Applicant: **Pietsch, Tibor, Dipl.-Ing.**
**Santo Domingo de Silos, 8**
**E-28036 Madrid(ES)**

(72) Inventor: **Pietsch, Tibor, Dipl.-Ing.**
**Santo Domingo de Silos, 8**
**E-28036 Madrid(ES)**

(74) Representative: **Patentanwälte Müller-Boré,**
**Deufel, Schön, Hertel, Lewald, Otto**
**Isartorplatz 6**
**D-8000 München 2(DE)**

(54) Artificial pumice stone.

(57) An artificial pumice stone is described. These bodies are relatively light-weight, containing massive parts and gaseous parts, and are abrasive. Following the present description, the material of these bodies is cellular glass which is obtained from a mixture of glass powder and cellulating agent. This mixture is heated for melting and cellulating and is cooled down afterwards. The desired relatively small cellular glass bodies are obtained by dosing small parts of the mixture before the heating, or by reducing bigger cellular glass bodies into smaller cellular glass bodies preferably by a sudden change of temperature. These cellular glass bodies receive an abrasive treatment on their surface, cleaning the surface generally eliminating the glass crust that covers the cells and rounding the edges, where the abrasive elements are principally the cellular glass bodies themselves. The final size of the abrasive treated bodies is between 1 and 30 centimetres and the density between 0.2 and 2.0 grams per cubic centimetre. The cells of these bodies can be filled with liquids and preferably by the vacuum process.

## Artificial Pumice Stone

### Description of the Invention

An artificial pumice stone is described, its material is cellular glass.

Several kinds of pumice stones are known:

The natural pumice stone is of volcanic origin, abrasive, relatively light-weight and contains solid and gaseous parts; this natural pumice stone has been used for thousands of years for filing, polishing and at the present time is also used for washing cloth, this is to say to soften and discolour cloths such as jean, linen and others.

The first inconvenience of the natural pumice stone is that its good quality is difficult to find because the mines are exhausting and its exploitation is limited by laws for nature protection. Another inconvenience is that the natural pumice stone found in the same mine and same bag can be of variable quality and so for example the said washing process of cloth must be constantly modified. The natural pumice stone contains up to 70 per cent water of its weight. Consequently, also water is sold and shipped. This water contents diminishes during the shipping and storage. This water contents variation or diminishing impedes the accounts and for example cloth washing and the work if the stones require to be filled with chemical liquids to help washing.

There are also artificial pumice stones, their material is expanded ceramics or expanded concrete, which have the inconvenience of their insufficient abrasivity and low mechanical strength, consuming quickly.

According to the present invention, the cellular glass pumice stones have the following advantages over the above mentioned pumice stones:

It is very abrasive, whereby the glass cell walls are sharp microscopical knives. Its density, mechanical strength, cell size and abrasivity can be regulated during the manufacturing and consequently it can be manufactured with the optimal quality for each use. Its quality is constant. Due to its high mechanical strength, 1 kilogram of cellular glass pumice stone can substitute 2 to 10 kilograms of natural pumice stone or ceramic or concrete pumice stones, which in fact reduces shipping costs, storage charges and working costs. The cellular glass pumice stones of the present invention are dry and so do not exhibit the mentioned trouble of water contents and its variation.

The manufacturing of the cellular glass consists in that a mixture of glass powder and cellulating agent is heated and consequently it melts, transforms into cellular glass and cools down afterwards. The relatively small sizes of the stones are obtained by dosing the corresponding small portions of the mixture, or by reducing bigger cellular glass bodies into smaller cellular glass bodies by a sudden change of temperature or mechanically by compression, flexion, impact or the like. The relatively small cellular glass bodies obtained in this way receive an abrasive treatment on their surface, eliminating dirt, glass crust and a part of their surface and rounding the edges and points, whereby the abrasive elements are partially or totally the cellular glass bodies themselves.

### Manufacturing example

In a ball mill, waste glass is ground till a fineness so that at least 60 per cent passes through a sieve with 0.088 millimetre openings. 100 kilograms of this glass powder, 6 kilograms of sodium silicate of 38 Baumé and 4 kilograms of calcium carbonate or magnesium carbonate are mixed. This mixture is distributed uniformly and continuously on a refractory endless belt that crosses continuously a kiln. The mixture compacted or not, melts, and at 900 degrees centigrade the carbonate decomposes into calcium oxyd and carbon dioxyd which creates cells in the melted mixture transforming it into cellular glass. Afterwards the cellular glass cools down suddenly but regulated so that it breaks into the desired small bodies due to the tension of the thermal retraction. The size of these small bodies is normally between 1 and 30 centimetres. These bodies have sharp edges, glass crust on their surface and for example clay with which the belt was covered to prohibit that the glass adheres to the belt. In order to eliminate these irregularities and to open the cells covered with the glass crust, said cellular glass bodies are introduced into a rotatory cylinder where said irregularities are eliminated principally by the mutual abrasion between the cellular glass bodies, receiving clean bodies with round edges and opened cells. So the abrasive tools are the cellular glass bodies themselves.

The glass powder of the mixture can be substituted partially or totally by vitrifiable material as basalt, sand and others.

In order to make the cellular glass stones absorbable, talcum, calcium oxyd and others can be added to the mixture.

The reduction of the big cellular glass body or bodies into smaller bodies can also be mechanical, that is to say by compression, flexion, impact or others.

To avoid this reduction of the cellular glass belt into small bodies, another kind of reduction can be done by dosing the corresponding independant small portions of the mixture, which normally has to be compacted, these portions are submitted to the heating process.

The small parts or bodies can be obtained also by cutting out by means of punches during the manufacturing process. Naturally, the cellular glass can be manufactured also in moulds.

The end cellular glass product can have a density between 0.2 and 2.0 grams per cubic centimetre, depending on the dose of the cellulating agent, temperature of the cellulating and time of the cellulating.

The mixture can also contain pigment.

The end product can also contain liquids such as water, acid and the like to help washing, which can be absorbed by capillarity, introducing the cellular glass bodies into liquids, or made by vacuum whereby the space is empty of the gas contents, and the empty space is then filled with the liquid when the atmospheric pressure comes back.

Comparison with other manufacturing methods of cellular glass

There are in the world many cellular glass patents and manufacturing methods principally for thermal insulation purpose. All these cellular glass products are regular shaped and cut by means of saws, as for example diamond or carborundum saws. Following the present invention, the cellular glass bodies are not cut by means of saws but broken principally by a sudden temperature change, or without breakage, manufacturing small cellular glass bodies in the kiln with the size near to the end size. These relatively small bodies are not cut by means of saw but submitted to an abrasive process that open the closed cells on the surface and round the edges, there is neither saw nor special abrasive tools, whereby the abrasive tools are principally the cellular glass bodies themselves.

The opened cells on the surface are very important for the needed abrasivity, because cells covered with a glass crust lack abrasivity. The round edges are also very important, because sharp edges can hurt the worker's hand and damage the cloth in case of cloth washing.

The manufacturing of the relatively small cellular glass bodies with the up to now known manufacturing methods, cutting by means of saws, eliminating the glass crust and rounding the edges with for example diamond or carborundum tools would be very expansive because of working time, depreciation of machinery and wear of abrasive tools to compete with the natural pumice stone.

**Claims**

1. Artificial pumice stones, characterized in that their material is cellular glass, manufactured by cellulating glass powder in thermal treatment.

2. Artificial pumice stones according to claim 1, characterized in that their manufacturing method consists in a thermal treatment of a mixture of glass powder and cellulating agent when the mixture melts, transforms into cellular glass and cools down, obtaining bodies with desired sizes by dosing the corresponding portions of the mixture, or by reducing bigger cellular glass bodies into smaller cellular glass bodies by a sudden change of temperature, the cellular glass bodies obtained in this way receiving an abrasive treatment on their surface, eliminating a part on their surface, opening the closed cells and rounding the edges and points if existing, the abrasive tools being partially or totally the cellular glass bodies themselves.

3. Method according to claims 1 to 2, characterized in that the glass powder can contain glass granules or can be substituted by glass granules.

4. Method according to claims 1 to 2, characterized in that the glass powder can be substituted partially or totally by a vitrifiable material powder like basalt and/or the like.

5. Method according to claim 2, characterized in that the mixture contains additives like sodium silicate and/or the like.

6. Method according to claim 2, characterized in that the mixture can be compacted.

7. Method according to claim 2, characterized in that the reduction into small cellular glass bodies can also be mechanical, that is to say by compression, flexion, impact and the like.

8. Method according to claim 2, characterized in that the bodies with desired size can be obtained by cutting out by means of punches during the manufacturing process.

9. Method according to claim 2, characterized in that the quantity of cellulating agent, temperature of the thermal treatment and other factors is regulated in such a way that the density of the cellular glass bodies may be between 0.2 and 2.0 grams per cubic centimetre.

10. Method according to the preceding claims, characterized in that the size of the portions and/or the size reducing process and the abrasive treatment on the surface of the cellular glass bodies have to be such that the end size of the bodies may be between 1 and 30 centimetres.

11. Method according to claims 1 to 9, characterized in that the cellular glass bodies can be filled with liquids, preferably by vacuum process.